# FASCICULE DE BREVET EUROPEEN

(11) **EP 1 120 714 B1**
(45) Date de publication et mention de la délivrance du brevet: **30.05.2007**
(21) Numéro de dépôt: 01400195.2
(22) Date de dépôt: 24.01.2001
(51) Int. Cl.: G06F 13/42

(54) **Dispositif de régénération d'une horloge**
Regenerierungstaktschaltung
Clock regeneration circuit

(30) Priorité: 27.01.2000 FR 0001061
(43) Date de publication de la demande: 01.08.2001
(73) Titulaire: STMicroelectronics S.A., 92120 Montrouge (FR)
(72) Inventeur: Pomet, Alain, 94230 Cachan (FR); Malherbe, Alexandre, 94230 Cachan (FR); Marinet, Fabrice, 94230 Cachan (FR)
(74) Mandataire: Ballot, Paul Denis Jacques

(56) Documents cités:
- US-A- 5 889 436
- US-A- 5 920 211
- US-A- 5 970 110

## Description

La présente invention concerne un dispositif de régénération d'une horloge.

Elle s'applique plus particulièrement aux dispositifs échangeant des données par un bus série suivant un protocole de type USB (pour *Universal Serial Bus*). Selon ce protocole, l'horloge USB n'est pas transmise sur le bus. Seuls quelques bits de synchronisation sont envoyés en début de transmission, pour permettre aux dispositifs connectés à ce bus de se synchroniser, pour émettre ou recevoir des données, sur ce bus.

Dans des systèmes utilisant un tel protocole de transmission de données, les circuits intégrés comprennent habituellement et de manière tout à fait classique, un circuit de génération d'une horloge synchrone basé sur une boucle à verrouillage de phase et un quartz.

Dans l'invention, on s'intéresse à un système comprenant des supports portables du type carte à puce ou smartcard.

De tels supports portables ne peuvent pas intégrer un circuit de génération d'une horloge synchronisée selon l'état de l'art, car il n'est pas possible d'y intégrer ni le quartz ni la boucle à verrouillage de phase, qui prennent beaucoup trop de place.

L'invention concerne donc un dispositif de régénération de l'horloge du bus, à partir de quelques impulsions de synchronisation externes, au moins deux.

Dans l'exemple d'un bus série USB, la régénération de l'horloge USB doit avoir une précision de l'ordre de 1%.

Selon l'invention, pour mesurer la période horloge du bus, on utilise un oscillateur en anneau qui fournit n phases d'un signal d'horloge. On utilise une phase parmi ces n phases comme signal d'horloge de référence appliqué à un compteur, pour compter le nombre de périodes entières d'horloge de référence entre deux impulsions du bus et on lit l'état des n phases pour obtenir la phase courante dont le front montant coïncide avec la deuxième impulsion du bus, ce qui correspond à la mesure du retard entre l'horloge de référence et la deuxième impulsion du bus. Grâce à ces deux mesures, on peut régénérer l'horloge du bus, en appliquant ces deux mesures à un étage de régénération comprenant un oscillateur en anneau et des moyens de comptage identiques à ceux utilisés pour l'acquisition.

Un dispositif de régénération de l'horloge du bus selon l'invention comprend ainsi un étage d'acquisition et un étage de régénération comprenant chacun un oscillateur en anneau et des moyens de comptage. L'étage d'acquisition permet de mesurer le nombre de périodes entières d'horloge de référence compris entre deux impulsions successives du bus série, et la phase courante de l'horloge de référence sur la deuxième impulsion. L'étage de régénération utilise les mesures de l'étage d'acquisition pour générer une impulsion en sortie par un oscillateur en anneau et des moyens de comptage identiques.

L'invention concerne donc un dispositif de régénération de l'horloge d'un bus série externe, dans un circuit intégré, caractérisé en ce qu'il comprend un étage d'acquisition de la période de l'horloge du bus comprenant un oscillateur en anneau, des moyens de comptage et des moyens de lecture d'une phase courante, ledit oscillateur en anneau fournissant en sortie n phases d'un signal d'horloge, une phase étant appliquée comme signal d'horloge de référence aux dits moyens de comptage pour compter le nombre de périodes entières d'horloge de référence entre une première impulsion et une deuxième impulsion du bus, les dits moyens de lecture de la phase courante étant déclenchés par la deuxième impulsion, ladite phase courante correspondant à la mesure du retard de phase entre le signal d'horloge de référence et cette deuxième impulsion, le dispositif de régénération comprenant en outre un étage de régénération comprenant un oscillateur en anneau et des moyens de comptage identiques à ceux de l'étage d'acquisition, pour reproduire le nombre d'impulsions comptées et la phase courante d'acquisition, et commander un générateur d'impulsion fournissant en sortie un signal d'horloge régénéré.

D'autres caractéristiques et avantages de l'invention sont détaillés dans la description suivante, présentée à titre indicatif et non limitatif, et en référence aux dessins annexés dans lesquels :
- la figure 1 montre le signal reçu par un circuit intégré, d'un bus série externe dont on veut régénérer l'horloge en interne selon l'invention;
- la figure 2 représente un schéma bloc général d'un dispositif de régénération d'un signal d'horloge synchronisé selon un mode de réalisation de l'invention;
- la figure 3 est un schéma détaillé des oscillateurs avec les circuits de mémorisation et de sélection de phase;
- la figure 4 détaille le principe d'acquisition de la phase courante dans l'oscillateur de l'étage d'acquisition; et
- la figure 5 est un chronogramme des différents signaux du schéma de la figure 2, dans un exemple de séquencement selon l'invention.

La présente invention est plus particulièrement décrite dans le cadre d'une application à un circuit intégré assurant des transactions avec d'autres circuits intégrés par un bus série USB, mais son utilisation n'est pas limitée à cette application.

Ce bus se matérialise en pratique par deux lignes différentielles d+ et d- connectées dans chaque circuit intégré à un émetteur et un récepteur.

Selon le protocole associé à un tel bus, lorsqu'une transaction est initiée, on a une première phase transitoire pendant laquelle la tension de l'une des lignes différentielles monte, l'autre restant à zéro. Ensuite débute la transaction. Selon le protocole USB, des bits de synchronisation sont d'abord envoyés (par le gestionnaire système du bus qui a reçu une demande de transaction). Ensuite, le circuit initiateur de la transaction transmet ses données.

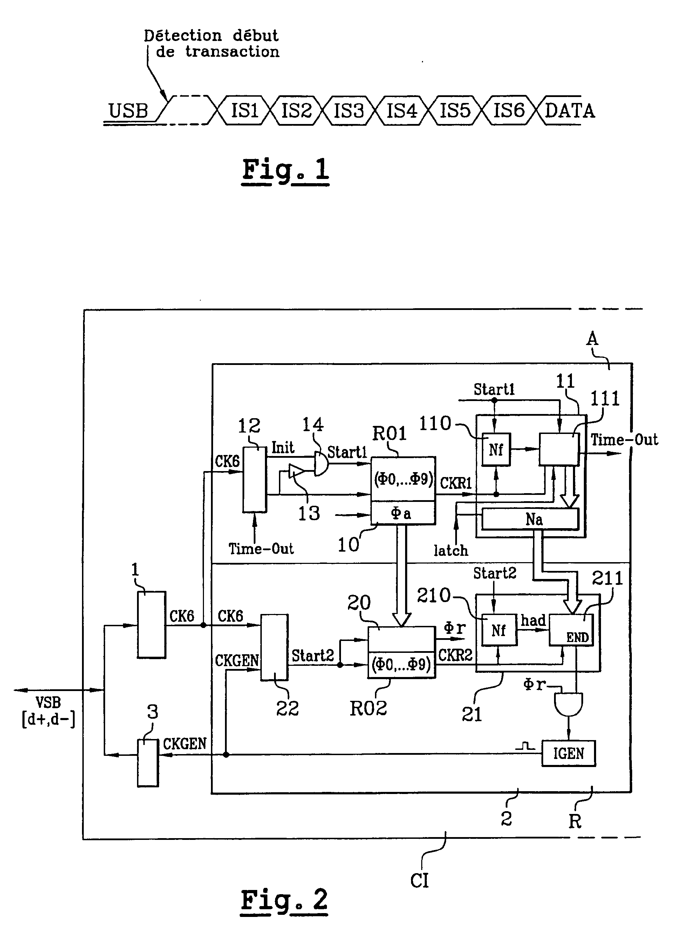

Sur la figure 1, on a représenté un exemple de début de transaction sur un bus série de type USB, avec la phase transitoire et le début de la transaction. Dans l'exemple, on a six impulsions de synchronisation IS1 à IS6, puis une suite de données logiques transmise par le circuit intégré qui a initié la transaction.

Dès que le récepteur d'un circuit intégré concerné par la transaction détecte une différence de tension entre les lignes différentielles d+ et d- du bus, le circuit intégré engage une procédure d'initialisation de transaction.

Il doit se préparer à recevoir les bits de synchronisation, typiquement six pour un bus USB, pour régénérer en interne l'horloge USB qui va lui permettre de recevoir et/ou d'émettre des données.

Selon l'invention, le dispositif de régénération utilise deux oscillateurs en anneau. Ainsi, la phase d'initialisation suivant la phase de détection d'un début de transaction comporte notamment la mise en route de ces oscillateurs.

Lorsque la phase d'initialisation est terminée, le dispositif de régénération selon l'invention est prêt. Selon l'invention, il peut mesurer l'horloge du bus à partir des deux premiers bits de synchronisation IS1 et IS2 reçus du bus USB. Les autres impulsions qui sont ensuite reçues sont utilisées pour mettre à jour les mesures, et resynchroniser le dispositif.

Un circuit intégré comprenant un dispositif de régénération selon l'invention est représenté sur la figure 2.

Dans le circuit intégré CI, après remise en forme dans un étage d'entrée 1 des signaux reçus des lignes différentielles d+ et d- du bus USB, on obtient un signal noté CK6. Sur ce signal, on reçoit donc les impulsions de synchronisation IS1 à IS6, puis une suite de 0 et de 1 correspondant aux données transmises à la fréquence de l'horloge USB. Ce signal CK6 est appliqué en entrée du dispositif 2 de régénération selon l'invention. Ce dispositif fournit en sortie, un signal d'horloge régénéré CKGEN, appliqué à un étage de sortie 3 de données sur le bus série USB.

Le dispositif 2 de régénération selon l'invention comprend un étage d'acquisition A et un étage de régénération R, qui fonctionnent en parallèle, l'étage de régénération utilisant à chaque nouveau cycle de régénération les données fournies par l'étage d'acquisition.

L'étage d'acquisition A comprend un oscillateur en anneau RO1, des moyens 10 d'acquisition et mémorisation de la phase courante Φa du signal d'horloge de référence fourni par l'oscillateur en anneau, des moyens de comptage 11 et de mémorisation du nombre Na de périodes du signal d'horloge de référence et des moyens 12 de séquencement de l'étage d'acquisition.

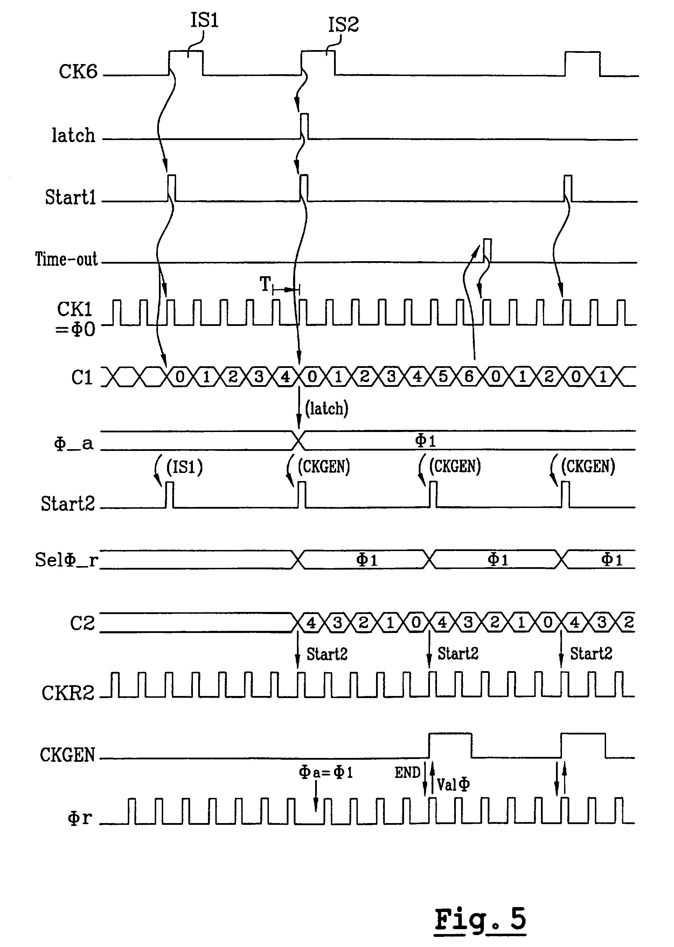

Si on se réfère à l'exemple de séquencement représenté sur le chronogramme de la figure 5, cet étage d'acquisition A est initialisé à chaque impulsion CK6 reçue du bus série. Plus précisément, dans l'exemple représenté, après la détection d'un début de transaction, la première impulsion de synchronisation IS1 sur CK6 entraîne l'activation d'un signal d'initialisation Init d'un cycle d'acquisition. Ce signal Init est appliqué comme signal d'initialisation Start1 de l'oscillateur en anneau R1 et des moyens de comptage 11. De cette façon, on synchronise l'oscillateur en anneau sur l'impulsion CK6, ce qui permet de compter, dans les moyens de comptage 11, le nombre de périodes entières de l'horloge de référence suivant cette première impulsion CK6.

Lorsque l'on reçoit la deuxième impulsion de synchronisation IS2, les moyens de séquencement activent un signal de commande latch, qui déclenche l'acquisition et la mémorisation de la phase courante Φa dans l'oscillateur RO1 et du nombre Na d'impulsions comptées entre les deux impulsions de CK6. Ce signal de commande latch lance ensuite l'initialisation de l'oscillateur en anneau et des moyens de comptage, pour un nouveau cycle d'acquisition. Sur la figure 2, on voit que la commande latch est appliquée comme signal d'initialisation Startl à travers une porte 13. Ainsi le signal d'initialisation Start1 est activé avec un peu de retard sur le signal latch, le temps de faire l'acquisition et la mémorisation des données Φa et Na.

Lorsque les impulsions de synchronisation de CK6 ont toutes été reçues, on reçoit des impulsions de CK6 à des intervalles de temps variables, supérieurs à une période d'horloge du bus, en fonction de la suite des données transmises. Dans ce cas, les données acquises entre deux de ces impulsions ne sont pas bonnes. Aussi, dans l'invention, on prévoit de n'activer les moyens d'acquisition et mémorisation des données Φa et Na, que si les deux impulsions de CK6 qui encadrent le cycle d'acquisition correspondent à une période horloge. Ceci peut être fait simplement, par exemple, en dimensionnant de manière appropriée les moyens de comptage, à un nombre maximum prédéterminé, en sorte que lorsque cette limite est atteinte, les moyens de comptage activent un signal indiquant le dépassement de cette limite ("*overflow*"). Ce signal de dépassement, noté Time-out dans la figure 2, pourrait encore être émis par un circuit de type chien de garde, ré-armé à chaque initialisation de l'étage d'acquisition.

Les moyens de séquencement 12 de l'étage d'acquisition sont réalisés en pratique au moyen de machines d'état pour générer de manière appropriée les signaux de commande Init et latch en fonction du signal CK6 et du signal Time-out.

Dans l'exemple, les signaux Init et latch sont appliqués chacun comme signal d'initialisation Start1 par une porte logique 14 du type OU.

En pratique, les moyens de comptage 11 peuvent comprendre deux compteurs 110 et 111. Le premier compteur 110, compte un nombre fixe Nf prédéterminé. Quand ce compte est atteint, il déclenche le comptage dans le deuxième compteur 111. La donnée Na correspondant à la mesure est alors celle du deuxième compteur, et sert à initialiser un compteur correspondant dans l'étage de régénération. Cette donnée Na est mémorisée dans un registre 11a sur activation de la commande latch appliquée au compteur 111.

L'étage de régénération comprend un oscillateur en anneau RO2, des moyens 20 de lecture de la phase Φa mémorisée dans l'étage d'acquisition et de sélection de la phase correspondante Φr dans l'oscillateur RO2, des moyens 21 de comptage du nombre Na fourni par l'étage d'acquisition et des moyens 22 d'initialisation de chaque nouveau cycle de régénération.

L'oscillateur en anneau RO2 est structurellement identique à celui de la phase d'acquisition. Il fournit en sortie un signal d'horloge de référence CKR2 qui sert à la régénération de l'horloge du bus.

Les moyens de comptage 21, reçoivent ce signal d'horloge de référence CKR2 pour compter le nombre Na fourni par l'étage d'acquisition R. Quand ce compte est atteint, il active en sortie un signal END de fin de comptage, appliqué comme signal de validation Val_Φ de sélection de la phase courante Φr du signal d'horloge de référence CK2. L'apparition de l'impulsion sur cette phase déclenche alors un générateur d'impulsions IGEN, qui fournit en sortie le signal d'horloge régénéré CKGEN.

Les moyens 22 de séquencement de l'étage de régénération ont pour fonction de ré-initialiser l'oscillateur RO2 et les moyens de comptage 21 à chaque nouveau cycle de régénération.

Le premier cycle de régénération est déclenché par l'apparition de la première impulsion IS1 de CK6.

Les cycles suivants sont par exemple déclenchés par chacune des impulsions de l'horloge régénérée CKGEN. Dans un séquencement plus complexe, on pourrait prendre en compte à défaut les impulsions de cette horloge régénérée CKGEN, ou bien, les impulsions de CK6 quand on en reçoit.

Dans tous les cas, à chaque nouveau cycle de régénération, on lance une nouvelle lecture des données Φa et Na fournies par l'étage d'acquisition, en sorte qu'à chaque cycle de régénération, on utilise les données les plus récentes.

On a précédemment vu que les moyens de comptage sont identiques dans les deux étages, permettant la régénération précise de l'horloge du bus.

Dans le cas où les moyens de comptage 11 de l'étage d'acquisition sont formés de deux compteurs 110 et 111, les moyens de comptage 21 de l'étage de régénération sont également formés de deux compteurs, le premier compteur 210, identique à celui de l'étage d'acquisition, pour compter un nombre fixe Nf d'impulsions d'horloge de référence, le deuxième compteur 211 identique à celui de l'étage d'acquisition, pour compter le nombre variable Na. Dans l'exemple, ce deuxième compteur 211 est utilisé en décompteur. Il est déclenché par le premier compteur 210 quand celui ci a atteint son compte Nf.

On comprend bien que le dispositif de régénération selon l'invention est basé sur l'identité des circuits servant d'un part à l'acquisition et d'autre part à la régénération, ces circuits étant utilisés dans l'étage d'acquisition, pour mesurer les données Φa et Na, ces mêmes circuits étant utilisés dans l'étage de restitution pour restituer en sortie le signal correspondant à ces mesures.

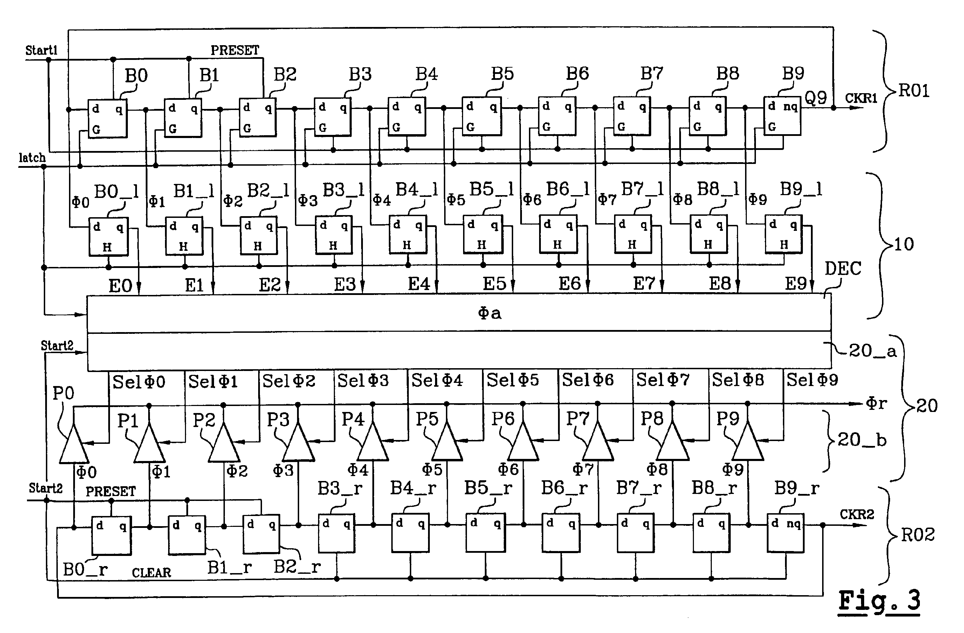

Sur la figure 3, on a détaillé les oscillateurs en anneau des étages d'acquisition et de régénération avec les moyens 10 d'acquisition et mémorisation et les moyens 20 de lecture et sélection de la phase courante Φa.

L'oscillateur en anneau RO1 comprend dans l'exemple 10 bascules de type D, B0 à B9, connectées en série, la sortie Q9 de la dernière bascule fournissant le signal d'horloge de référence CKR1 et étant rebouclée en entrée de la première bascule B0.

Dans l'exemple, les neuf premières bascules B0 à B8 sont telles que l'on applique leur sortie q sur l'entrée de la bascule suivante. La dixième bascule B9 est telle que l'on applique sa sortie nq comme signal de sortie et en entrée de la bascule B0. Mais ces dix bascules sont structurellement identiques, en sorte qu'elles imposent exactement le même retard entre leur entrée d et leur sortie q (B0 à B8) ou nq (B9). Ceci est obtenu en pratique de manière bien connue en inversant les signaux de commande de transfert dans la bascule "nq" par rapport aux bascules "q".

Le signal Start1 d'initialisation d'un cycle d'acquisition est appliqué pour forcer les conditions de départ de l'oscillateur en anneau RO1. Dans l'exemple, il est appliqué sur une entrée Preset de mise à 1 des trois premières bascules B0 à B2, et sur une entrée Clear de mise à "0" des autres.

Le signal latch quant à lui est appliqué aux bascules B0 à B9 de l'oscillateur pour les stopper, le temps de mémoriser dans d'autres bascules B0_l à B9_l l'état de leurs entrées D0 à D9. Ces bascules B0_l à B9_l des moyens 10 d'acquisition et mémorisation de la phase courante Φa sont du type bascule D à déclenchement par front. Dans l'exemple, le passage de 0 à 1 du signal latch déclenche la mémorisation dans ces bascules de l'entrée qui leur est appliquée. La sortie de ces bascules B0_l à B9_l est appliquée en entrées E0 à E9 d'un circuit DEC apte à fournir en sortie une information de mesure de phase, c'est à dire une information de détermination d'une entrée de bascule parmi les dix de l'oscillateur en anneau, correspondant à la phase courante Φa du signal d'horloge de référence CKR1 au moment de la réception d'une impulsion de CK6.

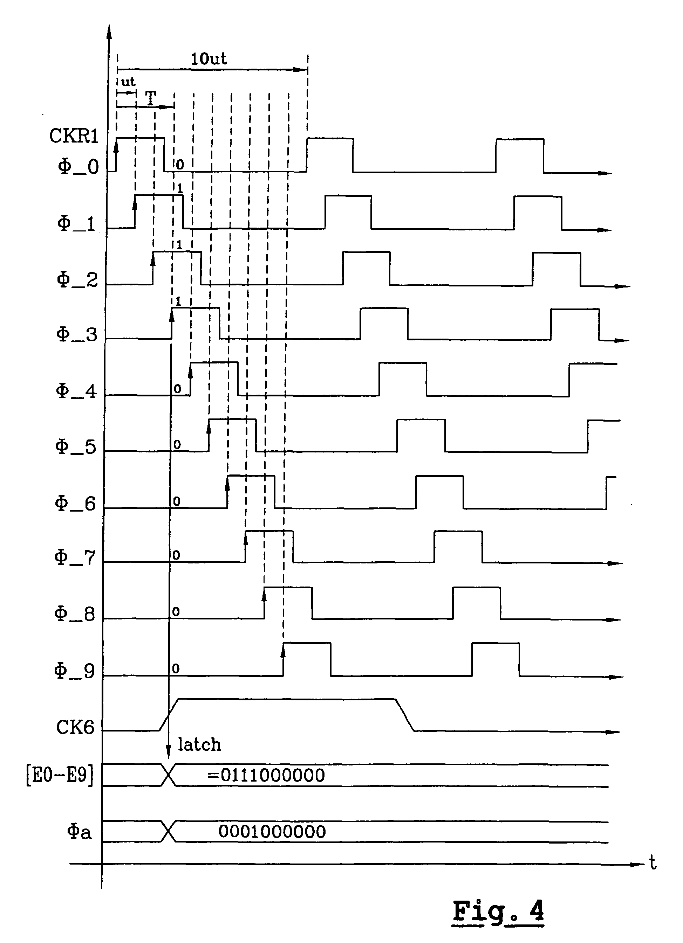

Le principe d'acquisition de la phase courante est illustré sur la figure 4.

L'oscillateur en anneau fournit n phases d'un signal d'horloge, une par entrée de bascule. Dans l'exemple, n=10. On a donc les phases Φ0 à Φ9.

Dans l'exemple, la phase Φ0 est prise comme phase de référence, pour être utilisée comme signal d'horloge de référence CKR1 appliqué aux moyens de comptage. Ainsi, dans l'exemple, lorsque l'on ré-initialise l'oscillateur en anneau et les moyens de comptage, on obtient alors en sortie le front montant d'une impulsion sur la phase Φ0, à partir duquel les moyens de comptage peuvent compter un nombre de périodes entières du signal d'horloge de référence.

Les n phases de l'oscillateur sont déphasées les unes par rapport aux autres du retard ut de la bascule, le même dans chaque bascule.

Si l'oscillateur en anneau est dimensionné pour que ce retard ut soit de 1 nanoseconde, on obtient dix signaux de phase de période 10 ns, déphasés les uns par rapport aux autres de 1 ns.

Si on se réfère aux figures 4 et 5, le premier cycle d'acquisition est déclenché par la réception de la première impulsion IS1 de CK6. Le principe d'acquisition selon l'invention consiste à synchroniser la phase Φ0 qui sert de signal d'horloge de référence CKR1 sur cette impulsion IS1. Ceci est obtenu en forçant l'initialisation (Start1) de l'oscillateur RO1 et des moyens de comptage 11 sur réception de l'impulsion IS1. On a vu que l'on obtient en sortie un front montant d'impulsion sur Φ0, à partir duquel, les moyens de comptage vont commencer à compter un nombre de périodes entières de CKR1.

Lorsque la deuxième impulsion IS2 est reçue, le signal latch est activé, qui stoppe l'oscillateur et les moyens de comptage. Le nombre Na d'impulsions comptées est chargé dans un registre de mémorisation, ainsi que l'état des entrées des bascules B0 à B9, ce qui permet de déduire le retard de phase entre la dernière impulsion de la phase de référence Φ0 et l'impulsion IS2 de CK6.

Ce retard correspond à la mesure, dans l'unité de temps ut, de l'intervalle de temps T entre la dernière impulsion de CKR1=Φ0 et l'impulsion IS2 de CK6, soit dans l'exemple, à 1 nanoseconde près.

Ce retard correspond à l'identification de la phase courante, c'est à dire de la phase avec laquelle l'impulsion de CK6 correspond à un front montant. C'est ce que l'on appelle la mesure de la phase courante.

Il s'agit alors dans l'étage de régénération, de sélectionner cette phase pour reproduire l'intervalle de temps à laisser s'écouler après le comptage du nombre Na d'impulsions, avant de régénérer l'impulsion CKGEN.

Pour cela l'oscillateur en anneau RO2 de l'étage de régénération doit être strictement identique à l'oscillateur en anneau RO1 de l'étage d'acquisition.

L'oscillateur RO2 comprend donc dans l'exemple 10 bascules de type D, B0_r à B9_r, en série, la sortie Q9 de la dernière bascule fournissant le signal d'horloge de référence CKR2 et étant appliqué en entrée de la première bascule B0_r (Fig.3). Le signal Start2 est appliqué à ces bascules pour forcer exactement les mêmes conditions d'initialisation (Preset, Clear) que dans l'oscillateur en anneau RO1.

Les moyens de lecture 20 de la phase à sélectionner dans l'oscillateur en anneau RO2 comprennent un circuit logique 20_a pour transmettre l'information de sélection de phase Sel_Φ = [Sel_Φ0, Sel_Φ1, ... , Sel_Φ9] sur un circuit 20_b de portes commandées. Cette transmission est effectuée sur activation du signal Start2.

L'information de sélection de phase Sel_Φ est telle qu'un seul bit est à 1, tous les autres étant à zéro, pour sélectionner une seule entrée de bascule de l'oscillateur en anneau RO2 comme sortie de phase Φr.

Le circuit de portes commandées 20_b comprend une porte par bascule de l'oscillateur RO2, soit dans l'exemple dix portes commandées P0,... , P9. Chacune de ces portes est connectée entre l'entrée de la bascule associée et la sortie de phase Φr. Cette sortie de phase Φr est appliquée au circuit IGEN de génération d'impulsion, quand le signal END de fin de comptage des moyens 21 est activé.

Avec un dispositif selon l'invention, on est en pratique capable de régénérer l'horloge du bus et ce avec une grande précision.

Ce dispositif est plus particulièrement applicable dans les circuits intégrés des supports portables type carte à puce, mais peut être utilisé plus généralement.

## Revendications

1. Dispositif de régénération de l'horloge d'un bus série externe (USB), dans un circuit intégré (CI), **caractérisé en ce qu'**il comprend un étage d'acquisition (A) de la période de l'horloge du bus comprenant un oscillateur en anneau (RO1), des moyens de comptage (11) et des moyens de lecture d'une phase courante (Φa), ledit oscillateur en anneau (RO1) fournissant en sortie n phases (Φ0 à Φ9) d'un signal d'horloge, une phase (Φ0) étant appliquée comme signal d'horloge de référence (CKR1) aux dits moyens de comptage pour compter le nombre (Na) de périodes entières d'horloge de référence (CKR1) entre une première impulsion (IS1) et une deuxième impulsion (IS2) du bus, les dits moyens de lecture de la phase courante étant déclenchés par la deuxième impulsion (IS2), ladite phase courante (Φa) correspondant à la mesure du retard de phase entre le signal d'horloge de référence (CKR1) et cette deuxième impulsion, le dispositif de régénération comprenant en outre un étage de régénération (R) comprenant un oscillateur en anneau (RO2) et des moyens de comptage (21) identiques à ceux de l'étage d'acquisition, pour reproduire le nombre d'impulsions comptées et la phase courante d'acquisition (Φa, Na), et commander un générateur d'impulsion (IGEN) fournissant en sortie un signal d'horloge régénéré (CKGEN).

2. Dispositif selon la revendication 1, **caractérisé en ce que** l'étage d'acquisition comprend des moyens (12) de ré-initialisation de l'oscillateur en anneau (RO1) et des moyens de comptage (11) pour synchroniser le cycle d'acquisition sur chaque impulsion du bus série (CK6).

3. Dispositif selon la revendication 2, **caractérisé en ce que** les dits moyens de ré-initialisation activent un premier signal de commande (Init) sur réception de la première impulsion (IS1), qui déclenche la ré-initialisation (Start1) et **en ce qu'**ils activent un deuxième signal de commande (latch) pour mémoriser la phase courante (Φa) et le nombre d'impulsions (Na), puis déclencher la ré-initialisation (Start1).

4. Dispositif selon la revendication 2 ou 3, **caractérisé en ce que** l'étage de régénération (R) comprend des moyens de ré-initialisation (12) pour ré-initialiser (Start2) l'oscillateur en anneau (RO2) et les moyens de comptage (21) sur réception d'une impulsion du bus série ou du signal d'horloge régénéré (CKGEN).

5. Dispositif selon la revendication 4, **caractérisé en ce que** l'étage de régénération comprend des moyens de ré-initialisation (12) pour ré-initialiser (Start2) l'oscillateur en anneau (RO2) et les moyens de comptage (21) sur réception de la première impulsion (IS1) du bus série, et de chaque impulsion d'horloge régénérée (CKGEN).

6. Dispositif selon l'une des revendications 4 à 5, **caractérisé en ce que** la phase courante (Φa) et le nombre d'impulsions (Na) fournis par l'étage d'acquisition (A) sont lus par l'étage de régénération (R) à chaque ré-initialisation (Start2).

7. Dispositif selon l'une quelconque des revendications précédentes, **caractérisé en ce que** l'étage de régénération comprend des moyens de sélection (12) de la phase courante (Φa), comprenant un porte commandée par phase de l'oscillateur en anneau, pour sélectionner une phase parmi les n phases, correspondant à la phase courante (Φa).

8. Dispositif selon l'une quelconque des revendications précédentes, **caractérisé en ce que** les moyens de comptage (11, 21) des étages d'acquisition et de régénération comprennent deux compteurs, un premier (110, 210) pour compter un nombre fixe (Nf) de coups d'horloge de référence (CKR1, CKR2), un deuxième (111, 121) pour compter un nombre variable (Na).

9. Dispositif selon la revendication 8, **caractérisé en ce que** le deuxième compteur (210) de l'étage de régénération (R) est utilisé en décompteur, le passage à zéro du compteur activant un signal de commande END, appliqué comme signal de validation de sélection de la phase courante (Φa) dans l'oscillateur (R02).

10. Dispositif selon l'une quelconque des revendications précédentes, **caractérisé en ce que** l'étage d'acquisition est ré-initialisé à l'expiration d'un délai (Time-out) après la réception de chaque impulsion du bus série, si aucune autre impulsion du bus série n'a suivi dans ce délai.

11. Dispositif selon la revendication 10, **caractérisé en ce que** ce délai (Time-out) est fourni par les moyens de comptage (11) de l'étage d'acquisition (A), après comptage d'un nombre maximum prédéterminé.

12. Dispositif selon la revendication 10, **caractérisé en ce que** ce délai (Time-out) est fourni par un chien de garde réarmé à chaque nouvelle impulsion du bus série.

13. Dispositif selon l'une quelconque des revendications précédentes, **caractérisé en ce que** le bus série externe est de type USB.

14. Circuit intégré comprenant un dispositif selon l'une quelconque des revendications précédentes.

15. Support portable du type carte à puce comprenant un circuit intégré selon la revendication 14.

## Claims

1. A device for the regeneration of the clock of an external serial bus (USB) in an integrated circuit (CI), **characterized in that** it comprises a stage (A) for the acquisition of the period of the clock of the bus comprising a ring oscillator (RO1), counting means (11) and means for the reading of a current phase (Φa), said ring oscillator (RO1) giving, at output, n phases (Φ0 to Φ9) of a clock signal, a phase (Φ0) being applied as a reference clock signal (CKR1) to said counting means to count the number (Na) of entire reference clock (CKR1) periods between a first pulse (IS1) and a second pulse (IS2) of the bus, said means for the reading of the current phase being activated by the second pulse (IS2), said current phase (Φa) corresponding to the measurement of the phase delay between the reference clock (CKR1) signal and this second pulse, the regeneration device furthermore comprising a regeneration stage (R) comprising a ring oscillator (R02) and counting means (21) identical to those of the acquisition stage, to reproduce the number of pulses counted and the current acquisition phase (Φa, Na) and control a pulse generator (IGEN) giving a regenerated clock signal (CKGEN) at output.

2. A device according to claim 1, **characterized in that** the acquisition stage comprises means (12) of re-initializing the ring oscillator (RO1) and counting means (11) to synchronize the acquisition cycle on each pulse of the serial bus (CK6).

3. A device according to claim 2, **characterized in that** said re-initializing means activate a first control signal (Init) upon reception of the first pulse (IS1), which activates the re-initialization (Start1) and **in that** they activate a second control signal (latch) to store the current phase (Φa) and the number (Na) of pulses and then activate the re-initialization.

4. A device according to claim 2 or 3, **characterized in that** the regeneration stage (R) comprises re-initialization means (12) to re-initialize (Start2) the ring oscillator (R02) and the counting means (21) upon reception of a pulse from the serial bus or of the regenerated clock signal (CKGEN).

5. A device according to claim 4, **characterized in that** the regeneration stage comprises re-initializing means (12) to re-initialize (Start2) the ring oscillator (R02) and the counting means (21) upon reception of the first pulse (IS1) of the serial bus, and of each regenerated clock signal pulse (CKGEN).

6. A device according to one of the claims 4 to 5, **characterized in that** the current phase (Φa) and the number of pulses (Na) given by the acquisition stage (A) are read by the regeneration stage (R) at each re-initialization (Start 2).

7. A device according to any of the above claims, **characterized in that** the regeneration stage comprises means (12) of selection of the current phase (Φa), comprising a phase-controlled gate of the ring oscillator, to select one phase among the n phases, corresponding to the current phase (Φa).

8. A device according to any of the above claims, **characterized in that** the counting means (11, 21) of the acquisition and regeneration stages comprise two counters, a first counter (110, 210) to count a fixed number (Nf) of reference clock strokes (CKR1, CKR2), a second counter (111, 211) to count a variable number (Na).

9. A device according to claim 8, **characterized in that** the second counter (210) of the regeneration stage (R) is used as a countdown unit, the passage to zero of the counter activating a control signal (END) applied as an enabling signal for the selection of the current phase (Φa) in the oscillator (R02).

10. A device according to any of the above claims, **characterized in that** the acquisition stage is re-initialized at the expiry of a time period (Time-out) after the reception of each pulse of the serial bus, if no other pulse of the serial bus has followed in this time period.

11. A device according to claim 10, **characterized in that** this time period (Time-out) is given by the counting means (11) of the acquisition stage (A), after the counting of a predetermined maximum number.

12. A device according to claim 10, **characterized in that** this time period (Time-out) is given by a watchdog reset at each new pulse of the external serial bus.

13. A device according to any of the above claims, **characterized in that** the serial bus is a USB type bus.

14. An integrated circuit comprising a device according to any of the above claims.

15. A smart-card type portable support comprising an integrated circuit according to claim 14.

## Patentansprüche

1. Vorrichtung zum Regenerieren des Taktgebers von einem seriellen externen Bus (USB) in einem integrierten Schaltkreis (CI), **dadurch gekennzeichnet, dass** sie eine Erfassungsstufe (A) zum Erfassen der Periode des Bustaktgebers mit einem Ringoszillator (RO1), Zählmitteln (1) und Mitteln zum Einlesen einer laufenden Phase (Φa) aufweist, wobei der Ringoszillator (RO1) am Ausgang n Phasen (Φ0 bis Φ9) eines Referenztaktsignals (Φ0) ausgibt, wobei eine Phase (Φ0) als Referenztaktsignal (CKR1) an den Zählmitteln zum Zählen der Anzahl (Na) von ganzen Referenztaktperioden (CKR1) zwischen einem ersten Impuls (IS1) und einem zweiten Impuls (IS2) des Busses anliegt, wobei die Mittel zum Einlesen der laufenden Phase durch den zweiten Impuls (IS2) getriggert werden, wobei die laufende Phase (Φa) dem Maß der Phasenverzögerung zwischen dem Referenztaktsignal (CKR1) und diesem zweiten Impuls entspricht, wobei die Regenerierungsvorrichtung ferner eine Regenerierungsstufe (R) mit einem Ringoszillator (R02) und Zählmitteln (21) aufweist, die identisch zu denen der Erfassungsstufe sind, um die Anzahl an Zählimpulsen und die laufende Erfassungsphase (Φa, Na) zu reproduzieren und einen Impulsgenerator (IGEN) zu steuern, der am Ausgang ein regeneriertes Taktsignal (CKGEN) ausgibt.

2. Vorrichtung nach Anspruch 1, **dadurch gekennzeichnet, dass** die Erfassungsstufe Mittel (12) zum Reinitialisieren des Ringsoszillators (RO1) und Zählmittel (11) aufweist, um den Erfassungstakt mit jedem Impuls des seriellen Busses (CK6) zu synchronisieren.

3. Vorrichtung nach Anspruch 2, **dadurch gekennzeichnet, dass** die Reinitialisierungsmittel bei Empfang des ersten Impulses (IS1) ein erstes Steuersignal (Init) aktivieren, das die Reinitialisierung (Start1) auslöst, und dass sie ein zweites Steuersignal (latch) aktivieren, um die laufende Phase (Φa) und die Anzahl an Impulsen (Na) einzuspeichern und dann die Reinitialisierung (Start1) auszulösen.

4. Vorrichtung nach Anspruch 2 oder 3, **dadurch gekennzeichnet, dass** die Regenerierungsstufe (R) Reinitialisierungsmittel (12) aufweist, um bei Empfang eines Impulses vom seriellen Bus oder des regenerierten Taktsignals (CKGEN) den Ringsoszillator (R02) und die Zählmittel (21) zu reinitialisieren (Start2).

5. Vorrichtung nach Anspruch 4, **dadurch gekennzeichnet, dass** die Regenerierungsstufe Reinitialisierungsmittel (12) aufweist, um bei Empfang des ersten Impulses (IS1) vom seriellen Bus und eines jeden regenerierten Taktimpulses (CKGEN) den Ringsoszillator (R02) und die Zählmittel (21) zu reinitialisieren (Start2).

6. Vorrichtung nach einem der Ansprüche 4 und 5, **dadurch gekennzeichnet, dass** die laufende Phase (Φa) und die Anzahl (Na) an von der Erfassungsstufe (A) ausgegebenen Impulsen bei jeder Reinitialisierung (Start2) von der Regenerierungsstufe (R) eingelesen werden.

7. Vorrichtung nach einem der vorangehenden Ansprüche, **dadurch gekennzeichnet, dass** die Regenerierungsstufe Mittel (12) zum Auswählen der laufenden Phase (Φa) mit einem phasengesteuerten Gate des Ringsoszillators aufweist, um unter den n Phasen eine Phase auszuwählen, welche der laufenden Phase (Φa) entspricht.

8. Vorrichtung nach einem der vorangehenden Ansprüche, **dadurch gekennzeichnet, dass** die Zählmittel (11, 21) der Erfassungs- und der Regenerierungsstufe zwei Zähler aufweisen, nämlich einen ersten (110, 210) zum Zählen einer festen Zahl (Nf) von Referenztaktschlägen (CKR1, CKR2) und einen zweiten (111, 121) zum Zählen einer variablen Zahl (Na).

9. Vorrichtung nach Anspruch 8, **dadurch gekennzeichnet, dass** der zweite Zähler (210) der Regenerierungsstufe (R) als Zwischenzähler verwendet wird, wobei mit dem Nulldurchgang des Zählers ein Steuersignal END aktiviert wird, das als Validierungssignal für die Auswahl der laufenden Phase (Φa) im Oszillator (R02) anliegt.

10. Vorrichtung nach einem der vorangehenden Ansprüche, **dadurch gekennzeichnet, dass** die Erfassungsstufe bei Ablauf einer Frist (Time-out) nach Empfang eines jeden Impulses vom seriellen Bus reinitialisiert wird, wenn kein weiterer Impuls vom seriellen Bus innerhalb dieser Frist nachfolgt.

11. Vorrichtung nach Anspruch 10, **dadurch gekennzeichnet, dass** diese Frist (Time-out) nach Zählen einer vorgegebenen Höchstzahl über die Zählmittel (11) der Erfassungsstufe (A) ausgegeben wird.

12. Vorrichtung nach Anspruch 10, **dadurch gekennzeichnet, dass** diese Frist (Time-out) von einem Wächter ausgegeben wird, der bei jedem erneuten Impuls vom seriellen Bus zurückgesetzt wird.

13. Vorrichtung nach einem der vorangehenden Ansprüche, **dadurch gekennzeichnet, dass** der externe serielle Bus vom Typ USB ist.

14. Integrierter Schaltkreis mit einer Vorrichtung nach einem der vorangehenden Ansprüche.

15. Tragbarer Datenträger vom Typ Chipkarte mit einem integrierten Schaltkreis nach Anspruch 14.
